Europäisches Patentamt

European Patent Office

Office européen des brevets

(11) Veröffentlichungsnummer : **0 339 321 B1**

(12) **EUROPÄISCHE PATENTSCHRIFT**

(45) Veröffentlichungstag der Patentschrift :
08.07.92 Patentblatt 92/28

(51) Int. Cl.⁵ : **B23B 31/02**

(21) Anmeldenummer : **89106005.5**

(22) Anmeldetag : **06.04.89**

(54) **Spannvorrichtung zum axialen Spannen zweier voneinander lösbarer Maschinenteile.**

(30) Priorität : **29.04.88 DE 8805690 U**

(43) Veröffentlichungstag der Anmeldung :
**02.11.89 Patentblatt 89/44**

(45) Bekanntmachung des Hinweises auf die
Patenterteilung :
**08.07.92 Patentblatt 92/28**

(84) Benannte Vertragsstaaten :
**AT CH DE ES GB IT LI SE**

(56) Entgegenhaltungen :
**DE-A- 2 419 896**
**DE-A- 3 410 670**
**DE-A- 3 512 890**

(73) Patentinhaber : **Ott Maschinentechnik GmbH**
**Jägerstrasse 4-12**
**W-8960 Kempten (DE)**

(72) Erfinder : **Friedl, Franz**
**Egatweg 7**
**W-8952 Marktoberdorf (DE)**
Erfinder : **Heel, Helmut**
**Andreas-Mayer-Strasse 82 1/8**
**W-8951 Lengenwang (DE)**

(74) Vertreter : **Liebau, Gerhard, Dipl.-Ing.**
**Birkenstrasse 39 Postfach 22 02 29**
**W-8900 Augsburg 22 (DE)**

## Beschreibung

Die Erfindung betrifft eine Spannvorrichtung zum axialen Spannen zweier voneinander lösbarer Maschinenteile, insbesondere zum Spannen eines Werkzeugteiles in einer Werkzeugaufnahme, mit einem an dem ersten Maschinenteil (Werkzeug) vorgesehenen kegeligen oder zylindrischen, hohlen Zentrier-Ansatz, einer an den Ansatz anschließenden, senkrecht zur Zentralachse der Spannvorrichtung verlaufenden Anlagefläche, sowie einer innen im Ansatz vorgesehenen Ringnut, die eine sich zum freien Ansatzende hin konisch verjüngende Nutflanke aufweist, mit einer im zweiten Maschinenteil (Werkzeugaufnahme) vorgesehenen, dem Ansatz angepaßten Aufnahmebohrung an die sich eine senkrecht zur Zentralachse erstreckende Stirnfläche anschließt, an welche die Anlagefläche anpreßbar ist, mit mehreren im zweiten Maschinenteil im wesentlichen parallel zur Zentralachse angeordneten Spannklauen, die sich jeweils mit ihrem einen, ersten Ende an einer Nutflanke einer im zweiten Maschinenteil vorgesehenen Ringnut abstützen sowie einer im zweiten Maschinenteil axial beweglichen, radial innerhalb der Spannklauen angeordneten Spannhülse, die im Bereich der zweiten Enden der Spannklauen einen Spannkegel aufweist, mittels dem die zweiten Enden der Spannklauen radial nach außen bewegbar und an die Nutflanke des Ansatzes anpreßbar sind.

Bei einer derartigen bekannten Spannvorrichtung (Vortrag der Firma Gottlieb Gühring KG, 7480 Sigmaringen, anläßlich einer Sitzung des Arbeitskreises "Schnittstelle Maschine/Werkzeug" am 22. 5. 1987 in Frankfurt, VDMA-Haus) sind die Spannklauen als Kipphebel ausgebildet, was mit gewissen Nachteilen verbunden ist. denn beim Spannen die zweiten Enden der Spannklauen durch den Spannkegel nach außen gedrückt werden, stützen sich die hakenförmig ausgebildeten ersten Enden der Spannklauen an der Ringnut im zweiten Maschinenteil ab. Da jedoch die Spannklauen eine Kippbewegung ausführen, besteht nur Linienberührung zwischen den ersten Enden und der Nutflanke, an der sich diese abstützen. Ebenso liegen auch die zweiten Enden mit Linienberührung an der Nutflanke des Ansatzes an. Infolge dieser Linienberührung entsteht eine hohe Flächenpressung, die mit entsprechend hohem Verschleiß verbunden ist. Desweiteren ist der axiale Hub, den die zweiten Enden der Spannklauen bei deren Kippbewegung ausführen, verhältnismäßig klein. Infolgedessen dürfen die zusammenwirkenden Maschinenteile in axialer Richtung nur sehr geringe Toleranzen aufweisen, insbesondere die Nutflanke im Ansatz gegenüber dessen Anlagefläche und die Nutflanke im zweiten Maschinenteil gegenüber dessen Stirnfläche. Weiterhin sind die Spannklauen während ihrer Kippbewegung auf Biegung beansprucht und müssen demzufolge einen entsprechend großen Querschnitt aufweisen. Infolgedessen weist die bekannte Spannvorrichtung in radialer Richtung größere Bauabmessungen auf und erfordert einen entsprechend großen Durchmesser des Ansatzes am ersten Maschinenteil.

Der Erfindung liegt deshalb die Aufgabe zugrunde, eine Spannvorrichtung zum axialen Spannen zweier voneinander lösbarer Maschinenteile, insbesondere zum Spannen eines Werkzeugteiles in einer Werkzeugaufnahme, der eingangs erwähnten Art zu schaffen, bei der während des gesamten Spannvorganges ständig eine Flächenberührung zwischen den zusammenwirkenden Flächen der Spannklauen und der Nutflanken in beiden Maschinenteilen gewährleistet ist, die kleinere Bauabmessungen in radialer Richtung aufweist und bei der größere Toleranzen bei den zusammenwirkenden Maschinenteilen in axialen Richtung zulässig sind.

Dies wird nach der Erfindung dadurch erreicht, daß im Bereich der ersten Enden der Spannklauen an der Spannhülse ein weiterer, auf diese Enden einwirkender Spannkegel vorgesehen ist, so daß bei Axialbewegung der Spannhülse die Spannklauen parallel zu ihrer Ausgangslage radial nach außen bzw. innen bewegbar sind, daß die Nutflanke im zweiten Maschinenteil als eine sich zur Stirnfläche hin verjüngende Konusfläche ausgebildet ist, und daß die Spannklauen an ihren beiden Enden durch konische Flächenabschnitte gebildete Spannflächen aufweisen, deren Winkellage bezüglich der Zentralachse der Winkellage der Nutflanken entspricht, so daß während des gesamten Spannvorganges Flächenberührung zwischen den Spannflächen und den Nutflanken besteht.

Durch die Flächenberührung während des gesamten Spannvorganges tritt zwischen den zusammenwirkenden Flächen eine geringere Flächenpressung und damit auch ein geringerer Verschleiß auf. Gleichzeitig ergibt sich durch die geringere Flächenpressung auch eine höhere Steifigkeit. Beim Spannvorgang werden die Spannklauen parallel zu ihrer Ausgangslage radial nach außen geschaben und nicht mehr,wie bisher, gekippt. Hierbei entsteht in den Spannklauen lediglich eine Zugbelastung und keine Biegebelastung. Die Spannklauen können infolgedessen einen kleineren Querschnitt aufweisen, wodurch die gesamte Spannvorrichtung im Durchmesser kleiner baut. Außerdem können die zusammenwirkenden Maschinenteile in Achsrichtung größere Taleranzen aufweisen. Dies ist dadurch bedingt, daß die Spannflächen an den Enden der Spannklauen und die Nutflanken bei der Nachaußenbewegung der Spannklauen wie Keilflächen wirken und eine entsprechend große Axialbewegung zwischen den Maschinenteilen bewirken. Gleichzeitig werden auch größere axiale Anpreßkräfte zwischen der Anlagefläche und der Stirnfläche bewirkt und damit eine höhere Steifigkeit zwischen den zusammengespannten Maschinenteilen erzielt. Man kann die Winkel, mit denen die Spannflächen und die Nutflanken gegenüber der Bahrungsachse bzw. Schaftachse geneigt sind, variieren, um dadurch das Verhältnis der von den Spannklauen ausgeübten Radialkraft zur Axialkraft zu verändern und den jeweiligen Verhältnissen anzupassen.

Weitere varteilhafte Ausgestaltungen der Erfindung sind in den Unteransprüchen gekennzeichnet.

Die Erfindung ist in folgendem, anhand eines in der Zeichnung dargestellten Ausführungsbeispieles näher erläutert. Es zeigen:

Figur 1 einen Axialschnitt der Spannvorrichtung, rechts in gespannter Stellung, links in gelöster Stellung,
Figur 2 und 3 jeweils eine der Spannklauen mit unterschiedlichen Winkelanordnungen der Spannflächen.

In der Zeichnung ist mit 1 ein erstes Maschinenteil bezeichnet, welches mit dem zweiten Maschinenteil 2 über die Spannvorrichtung verbunden werden soll. Beispielsweise kann es sich bei dem ersten Maschinenteil 1 um ein Werkzeug und bei dem zweiten Maschinenteil 2 um eine Werkzeugmaschinenspindel handeln. Die erfindungsgemäßespannvorrichtung ist jedoch auch zur Verbindung anderer Maschinenteile geeignet, beispielsweise zur Verbindung eines Fräskopfes an einem Frässchlitten, zur Verbindung zweier Werkzeugmaschinentische untereinander, oder zur Verbindung von Aufspannvorrichtungen für Werkstücke mit Werkzeugmaschinentischen oder dgl..

Das erste Maschinenteil 1 kann einen kegelförmigen oder zylindrischen Zentrier-Ansatz 3 aufweisen, mit dem es in eine entsprechend angepaßte Aufnahmebohrung 4 eines mit dem zweiten Maschinenteil 2 fest verbundenen Zentrierringes 5 einsetzbar ist. Die Art der Zentrierung zwischen den beiden Maschinenteilen 1, 2 ist für die vorliegende Erfindung ohne wesentliche Bedeutung. Die Aufnahmebohrung 4 kann in dem zweiten Maschinenteil 2 auch direkt vorgesehen sein.

Der Ansatz 3 ist von einer senkrecht zur Ansatzachse bzw. Zentralachse A der Spannvorrichtung verlaufenden Anlagefläche 6 umgeben, die an eine sich ebenfalls senkrecht zur Zentralachse A erstreckende, die Aufnahmebohrung 4 umgebende Stirnfläche 7 anpreßbar ist. Der hohl ausgebildete Ansatz 3 ist mit einer Ringnut 8 versehen, die eine sich zum freien Ansatzende hin konisch verjüngende Nutflanke 9 aufweist. Die Nutflanke 9 wird durch eine Konusfläche gebildet.

Konzentrisch zur Zentralachse A sind in gleichen Umfangswinkelabständen mehrere Spannklauen, beispielsweise acht, angeordnet, die sich im wesentlichen parallel zur Zentralachse erstrecken. Am ersten Ende 10a jeder Spannklaue 10, ist eine durch einen konischen Flächenabschnitt gebildete Spannfläche 11 vorgesehen. Diese Spannfläche 11 stützt sich an einer Nutflanke 12 einer im zweiten Maschinenteil 2 vorgesehenen Ringnut 13 ab. Die Ringnut 13 und die Nutflanke 12 sind zweckmäßig unmittelbar in dem zweiten Maschinenteil 2 angeordnet. Die Nutflanke 12 ist eine Konusfläche und gegenüber den Zentralachse A im gleichen Winkel $\beta$ geneigt wie die Spannfläche 11. Das zweite Ende 10b jeder Spannklaue ist mit einer entgegengesetzt gerichteten Spannfläche 14 versehen, die ebenfalls durch einen konischen Flächenabschnitt gebildet wird und die gegenüber der Zentralachse A in einem Winkel $\beta1$ geneigt ist, der dem Neigungswinkel der Nutflanke 9 gegenüber der Zentralachse A entspricht. Die Winkel $\beta$ und $\beta1$ sind zweckmäßig gleich groß ausgebildet, sie können jedoch gegebenenfalls auch voneinander abweichen.

Radial innerhalb der Spannklauen 10 ist eine Spannhülse 15 vorgesehen, die mit einer Betätigungsstange 16 fest verschraubt ist. Die Spannhülse 15 weist im Bereich der zweiten Enden 10b der Spannklauen einen Spannkegel 17 auf. Ein weiterer Spannkegel 18 ist im Bereich der ersten Enden 10a der Spannklauen 10 vorgesehen. Jeder der Spannkegel weist zwei in unterschiedlichen Winkeln gegenüber der Zentralachse A geneigte konische Flächenabschnitte 17a, 17b bzw. 18a, 18b auf, von denen die jeweils näher zur Stirnfläche 7 liegenden Flächenabschnitte 17b, 18b einen kleineren Winkel mit der Zentralachse A einschließen, als die jeweils entfernter liegenden anderen Flächenabschnitte 17a, 18a.

Angrenzend an die ersten Enden 10a der Spannklauen ist ein in Achserichtung federbelasteter Druckring 19 vorgesehen, der beispielsweise durch die Tellerfedern 20 belastet ist. Der Druckring 19 weist eine der Anzahl der Spannklauen entsprechende Anzahl von radialen Vorsprüngen 21 auf, von denen jeder mit einer Schrägfläche 22 versehen ist. Die Vorsprünge 21 greifen passend in entsprechende, in den ersten Enden 10a vorgesehene Führungsnuten ein. Auf diese Weise werden die Spannklauen 10 in radialer Richtung geführt und in Umfangsrichtung in Abstand gehalten. Am Grund jeder Nut ist eine mit der Schrägfläche 22 des Vorsprunges 21 zusammenwirkende Schrägfläche 23 vorgesehen. Gegebenenfalls könnte die Anordnung auch umgekehrt sein, nämlich daß an den ersten Enden 10a der Spannklauen 10 jeweils eine Führungsrippe vorgesehen ist, die in einen radialen Führungsschlitz des Druckringes 19 eingreift.

Bei kegelförmiger Ausgestaltung des Zentrier-Ansatzes 3 ist zweckmäßig am freien Ende der Spannhülse im Anschluß an den ersten Spannkegel 17 ein axialer Fortsatz 24 vorgesehen, der zum Lösen des ersten Maschinenteils 1 mit einer an diesem vorgesehenen Ausstoßfläche zusammenwirkt.

Ferner sind am freien Ende des Ansatzes 3 des ersten Maschinenteils 1 mehrere axial vorspringende Mitnehmerzapfen 26 vorgesehen, die in entsprechende Mitnehmerausnehmungen 27 im zweiten Maschinenteil 2 eingreifen. Diese Mitnehmerzapfen 26 und Mitnehmerausnehmungen 27 sind zur Übertragung des Drehmomentes vorgesehen, soweit dieses nicht durch Reibschluß der aneinandergepreßten Flächen, insbesondere der Anlagefläche 6 und der Stirnfläche 7 der beiden Maschinenteile 1, 2 übertragen werden. Der Ansatz 3 könnte gegebenenfalls auch mit Mitnehmerausnehmungen versehen sein, in welche mit dem zweiten Maschinenteil 2 verbundene Mitnehmersteine eingreifen.

Die Wirkungsweise der neuen Spannvorrichtung ist folgende:

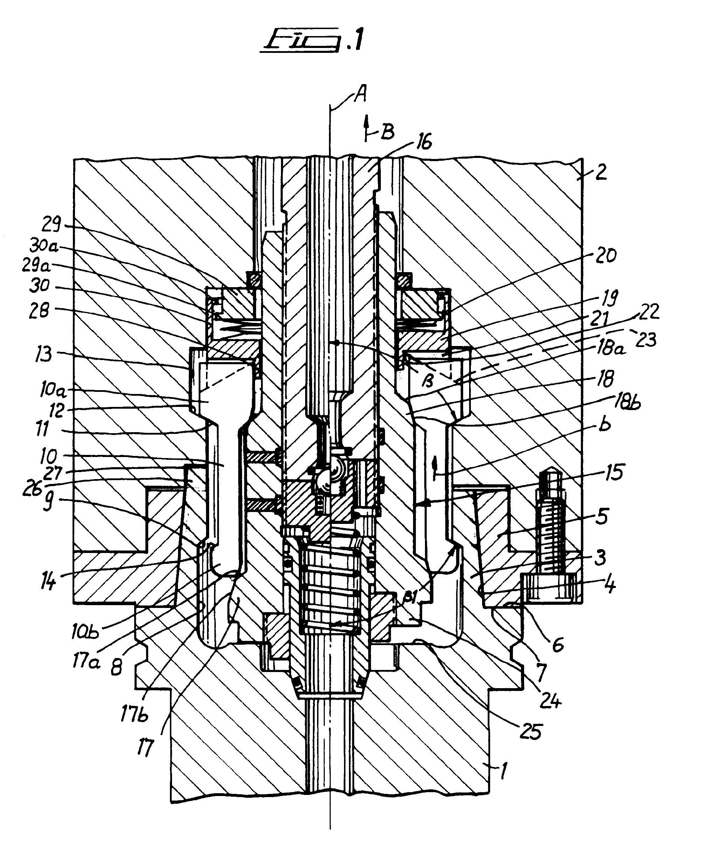

Zur Verbindung der beiden Maschinenteile 1, 2 wird das Maschinenteil 1 mit seinem Zentrier-Ansatz 3 in die Aufnahmebohrung 4 bei gelöster Spannvorrichtung eingesetzt, wie es in Figur 1, links, dargestellt ist. Dann wird die Betätigungsstange 16 gemäß Figur 1 nach oben verschoben und nimmt dabei die Spannhülse 15 mit. Hierdurch werden die sich zunächst an den Flächenabschnitten 17a und 18a abstützenden Spannklauen 10 bei geringer Axialbewegung der Betätigungsstange 16 verhältnismäßig weit radial nach außen verschoben, wobei jede Spannklaue 10 parallel zu sich selbst und parallel zur Zentralachse A nach außen bewegt wird. Bei weiterer Bewegung der Betätigungsstange 16 nach oben kommen schließlich die Flächenabschnitte 17b und 18b mit den Enden 10a und 10b der Spannklauen in Berührung. Da diese Flächenabschnitte 17b und 18b in einem kleineren Winkel gegenüber der Zentralachse A geneigt sind, werden jetzt die Spannklauen 10 mit hoher Kraft radial nach außen gedrückt. während der Verschiebung der Spannklauen 10 radial nach außen legen sich die an den unteren Enden 10b vorgesehenen Spannflächen 14 an die Nutflanke 9 an. Die sich radial nach außen bewegende Spannfläche 14 wirkt auf die Nutflanke 9 ähnlich wie ein Keil ein und drückt den Ansatz 3 gemäß Figur 1 nach oben. Hierdurch wird die Anlagefläche 6 fest an die Stirnfläche 7 in axialer Richtung angepreßt. Da die Spannklauen sich auch mit ihren ersten Enden 10a über geneigte Spannflächen 11 an der konischen Nutflanke 12 abstützen, bewegt sich jede Spannklaue 10 bei ihrer Radialbewegung auch axial in Richtung 8 nach oben. Durch diese in bezug auf das Maschinenteil 2 einwärts gerichtete Bewegung der Spannklauen 10 können größere axiale Toleranzen ausgeglichen werden. während des gesamten Spannvorganges ändert sich die Winkelstellung der Spannklauen 10 in bezug auf die Zentralachse nicht, so daß die Spannflächen 11 bzw. 14 ständig Flächenberührung mit den zugehörigen Nutflanken 12 bzw. 9 haben. Die Flächenpressung und der Verschleiß werden hierdurch gering gehalten.

Zum Lösen der Spannvorrichtung wird die Betätigungstange 16 entgegen der Pfeilrichtung 8 nach unten gedrückt. Der federbelastete Druckring 19 wirkt über die Schrägflächen 22, 23 auf die oberen Enden 10a der Spannklauen 10 ein und drückt diese radial nach innen. Am Ende des Hubes der Spannhülse 15 stößt deren Fortsatz 24 auf die Ausstoßfläche 25 und drückt das Maschinenteil 1 von dem Maschinenteil 2 weg. Hierdurch wird der konische Ansatz 3 aus der Aufnahmebohrung 4 gelöst.

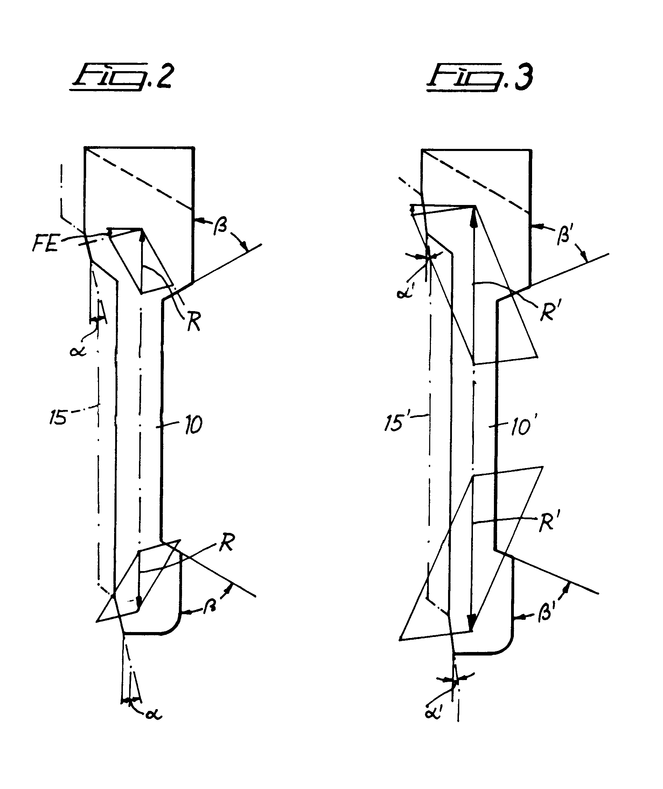

In den Figuren 2 und 3 ist der Kräfteverlauf an einer Spannklaue 10 bzw. 10′ bei unterschiedlich großen Winkeln α und β bzw. α′ und β′ dargestellt. Hierdurch soll gezeigt werden, daß die axial wirkenden Kraftresultierenden R bzw. R′ in einfacher Weise verändert und den jeweiligen Anforderungen angepaßt werden können. wählt man anstelle des in Figur 2 dargestellten Winkels β einen größeren Winkel β′ und/oder verkleinert man den Winkel α in α′, dann ergibt sich bei gleich großer, auf die Spannhülse 15 einwirkender, axialer Kraft FE bei dem in Figur 3 dargestellten Ausführungsbeispiel der Spannklaue 10′ eine als Spannkraft wirkende Kraftresultierende R′ in axialer Richtung, die vielfach größer ist als die entsprechende Kraftresultierende R bei der Spannklaue 10 gemäß Figur 2.

Zweckmäßig weist der Druckring an seiner den ersten Enden 10a zugekehrten Seite entlang seines Innendurchmessers einen zu den ersten Enden 10a hin vorstehenden, zylindrischen Kragen 28 auf, der in gelöstem Zustand der Spannvorrichtung als radialer Anschlag für die Spannklauen 10 dient.

weiterhin ist vorteilhaft zwischen den Druckfedern 20, die auf den Druckring 19 einwirken und dem zweiten Maschinenteil 2 ein Gegenring angeordnet. Der Druckring ist ferner mit einer den Gegenring 29 umgebenden Hülse 30 versehen. An der Hülse 30 ist ein radial nach innen vorspringender Bund 30a angeordnet und an dem Gegenring 29 ein radial nach außen vorspringender Bund 29a. Die beiden Bunde 29a, 30a überlappen sich radial etwas, so daß bei der Montage der Gegenring 29 mit seinem Bund 29a nur mit großer Kraft durch den Bund 30a der Hülse 30 axial hindurchgepreßt werden kann. Die beiden Bunde 29a und 30a begrenzen den Hub der beiden Ringe 19 und 29 in axialer Richtung und halten die beiden Ringe 19, 29 sowie die Tellerfedern 20 zu einer Montageeinheit zusammen. Gegebenenfalls kann die Anordnung auch umgekehrt getroffen werden, d.h. daß die Hülse am Gegenring angeordnet ist.

**Patentansprüche**

1. Spannvorrichtung zum axialen Spannen zweier voneinander lösbarer Maschinenteile (1, 2), insbesondere zum Spannen eines Werkzeugteiles in einer Werkzeugaufnahme, mit einem an dem ersten Maschinenteil (Werkzeug) (1) vorgesehenen kegeligen oder zylindrischen, hohlen Zentrier-Ansatz (3), einer den Ansatz umgebenden, senkrecht zur Zentralachse (A) der Spannvorrichtung verlaufenden Anlagefläche (6), sowie einer innen im Ansatz vorgesehenen Ringnut (8), die eine sich zum freien Ansatzende hin konisch verjüngende Nutflanke (9) aufweist, mit einer im zweiten Maschinenteil (Werkzeugaufnahme) (2) vorgesehenen, dem Ansatz (3) angepaßten Aufnahmebohrung (4), die von einer sich senkrecht zur Zentralachse (A) erstreckenden Stirnfläche (7) umgeben ist, an welche die Anlagefläche (6) anpreßbar ist, mit mehreren im zweiten Maschinenteil (2) im wesentlichen parallel zur Zentralachse (A) angeordneten Spannklauen (10), die sich jeweils mit ihrem einen, ersten Ende (10a) an einer Nutflanke (12) einer im zweiten Maschinenteil (2) vorgesehenen Ringnut (13) abstützen, sowie einer im zweiten Maschinenteil (2) axial beweglichen, radial innerhalb der Spannklauen (10) angeordneten Spannhülse (15), die im Bereich der zweiten Enden (10b) der Spannklauen (10) einen Spannkegel (17) aufweist, mittels dem die zweiten Enden (10b) der Spannklauen (10) radial nach außen bewegbar und an die Nutflanke (9) des Ansatzes (3) anpreßbar sind, dadurch gekennzeichnet, daß im Bereich der ersten Enden (10a) der Spannklauen (10) an der Spannhülse (15) ein weiterer auf diese Enden (10a) einwirkenden Spannkegel (18) vorgesehen ist, so daß bei Axialbewegung der Spannhülse (15) die Spannklauen (10) parallel zu ihrer Ausgangslage radial nach außen bzw. innen bewegbar sind, daß die Nutflanke (12) im zweiten Maschinenteil (2) als eine sich zur Stirnfläche hin verjüngende Konusfläche ausgebildet ist, und daß die Spannklauen (10) an ihren beien Enden (10a, 10b) durch konische Flächenabschnitte gebildete Spannflächen (11, 14) aufweisen, deren Winkellage bezüglich der Zentralachse (A) der Winkellage der Nurflanken (9, 12) entspricht, so daß während des gesamten Spannvorganges Flächenberührung zwischen den Spannflächen (11, 14) und den Nutflanken (9, 12) besteht.

2. Vorrichtung nach Anspruch 1, **dadurch gekennzeichnet**, daß jeder Spannkegel (17, 18) zwei in unterschiedlichen Winkeln zur Zentralachse (A) geneigte konische Flächenabschnitte (17a, 17b; 18a, 18b) aufweist, von denen die jeweils näher zur Stirnfläche (7) liegenden Flächenabschnitte (17b, 18b) einen kleineren Winkel ($\alpha$) mit der Zentralachse (A) einschließen als die jeweils entfernter liegenden anderen Flächenabschnitte (17a, 18a).

3. Vorrichtung nach Anspruch 1, **dadurch gekennzeichnet**, daß angrenzend an die ersten Enden (10a) der Spannklauen (10) ein in Achsrichtung federbelasteter Druckring (19) vorgesehen ist, der an seiner den ersten Enden (10a) zugekehrten Seite mit Steuerflächen (22) versehen ist, die mit entsprechenden Steuerflächen (23) an den ersten Enden (10a) zusammenwirken, um die zweiten Enden (10b) der Spannklauen im gelästen Zustand der Spannvorrichtung außer Eingriff mit der Nutflanke (9) des ersten Maschinenteils (1) zu bringen.

4. Vorrichtung nach Anspruch 3, **dadurch gekennzeichnet**, daß die Steuerflächen als gegenüber der Zentralachse (A) geneigte Schrägflächen (22, 23) ausgebildet sind.

5. Vorrichtung nach Anspruch 3 oder 4, **dadurch gekennzeichnet**, daß der Druckring (19) an seiner den ersten Enden (10a) zugekehrten Seite mit einer der Anzahl der Spannklauen (10) entsprechenden Anzahl von radial verlaufenden Vorsprüngen (21) versehen ist, welche je in eine in den ersten Enden (10a) vorgesehenen Führungsnuten passend eingreifen, wobei der Grund der Führungsnut die eine Schrägfläche (23) bildet und an jedem Vorsprung (21) die andere Schrägfläche (22) angeordnet ist.

6. Vorrichtung nach Anspruch 3 oder 4, **dadurch gekennzeichnet**, daß der Druckring (19) an seiner den ersten Enden (10a) der Spannklauen (10) zugekehrten Seite mit einer der Anzahl der Spannklauen (10) entsprechenden Anzahl von radialen Führungsschlitzen versehen ist, in welche je eine an jedem ersten Ende vorgesehene Führungsrippe eingreift.

7. Vorrichtung nach Anspruch 3, **dadurch gekennzeichnet**, daß der Druckring (19) an seiner den ersten Enden (10a) zugekehrten Seite entlang seines Innendurchmessers einen zu den ersten Enden (10a) hin vorstehenden zylindrischen Kragen (28) aufweist, der in gelöstem Zustand der Spannvorrichtung als radialer Anschlag für die Spannklauen (10) dient.

8. Vorrichtung nach Anspruch 3, **dadurch gekennzeichnet**, daß zwischen Druckfedern (20), die auf den Druckring (19) einwirken und den zweiten Maschinenteil (2) ein Gegenring (29) angeordnet ist, daß einer der beiden Ringe (19, 29) mit einer den anderen Ring (29) umgebenden Hülse (30) versehen ist und daß an der Hülse (30) ein radial nach innen vorspringender Bund (30a) und an dem anderen Ring (29) ein radial nach außen vorspringender Bund (29a) vorgesehen ist, wobei sich die Bunde (29a, 30a) radial überlappen und die beiden Ringe (19, 29) sowie die Druckfedern (20) zu einer Montageeinheit zusammenhalten.

9. Vorrichtung nach Anspruch 1, **dadurch gekennzeichnet**, daß die Ringnut (13) unmittelbar im zweiten Maschinenteil (2) ausgebildet ist.

10. Vorrichtung nach Anspruch 9, **dadurch gekennzeichnet,** daß die Ringnut (13) unmittelbar in einer Werkzeugmaschinenspindel ausgebildet ist.

11. Vorrichtung nach Anspruch 1, **dadurch gekennzeichnet,** daß am freien Ende der Spannhülse (15) im Anschluß an den ersten Spannkegel (17) ein axialer Fortsatz (24) vorgesehen ist, der zum Lösen des ersten Maschinenteils (1) mit einer an diesem vorgesehenen Ausstoßfläche (25) zusammenwirkt.

12. Vorrichtung nach Anspruch 1, **dadurch gekennzeichnet**, daß an dem freien Ende des Ansatzes (3) des ersten Maschinenteils (1) mehrere axial vorspringende Mitnehmerzapfen (26) vorgesehen sind, die in entsprechende Mitnehmerausnehmungen (27) in dem zweiten Maschinenteil (2) eingreifen.

**Claims**

1. Chuck for axially clamping two machine parts (1,2) which are releasable from each other, in particular for clamping a tool portion in a tool holding fixture, with a conical or cylindrical hollow centring attachment (3) provided on the first machine part (tool) (1), a contact face (6) surrounding the attachment and extending perpendicularly to the central axis (A) of the chuck, and an annular groove (8) provided on the inside of the attachment and comprising a groove flank (9) tapering conically towards the free end of the attachment, with a holding bore (4) which is provided in the second machine part (tool holding fixture) (2) and adapted to the attachment and which is surrounded by an end face (7) which extends perpendicularly to the central axis (A) and against which the contact face (6) can be pressed, with several clamping jaws (10) which are arranged essentially parallel to the central axis (A) in the second machine part (2) and which are each supported by a first end (10a) against a groove flank (12) of an annular groove (13) provided in the second machine part (2), and also a clamping sleeve (15) which is axially movable in the second machine part (2) and arranged radially within the clamping jaws (10) and which comprises in the region of the second ends of the clamping jaws a clamping cone (17) by means of which the second ends (10b) of the clamping jaws (10) are movable radially outwards and can be pressed against the groove flank (9) of the attachment (3), characterised in that in the region of the first ends (10a) of the clamping jaws (10), an additional clamping cone (18) acting on these ends (10a) is provided on the clamping sleeve (15) so that during axial movement of the clamping sleeve (15) the clamping jaws (10) are movable radially outwards or inwards parallel to their initialposition, that the groove flank (12) in the second machine part (2) is shaped as a conical surface tapering towards the end face, and the clamping jaws (10) comprise at both their ends (10a, 10b) clamping surfaces (11, 14) formed by conical surface sections whose angular position relative to the central axis (A) corresponds to the angular position of the groove flanks (9, 12) so that during the whole clamping process there is surface contact between the clamping surfaces (11, 14) and the groove flanks (9, 12).

2. Chuck according to claim 1 , **characterised in that** each clamping cone (17, 18) comprises two conical surface sections (17a, 17b; 18a, 18b) which are inclined at different angles to the central axis (A) and of which the surface sections (17b, 18b) respectively closer to the end face (7) form a smaller angle ( ) with the central axis (A) than the other surface sections (17a, 18a) which are respectively further away.

3. Chuck according to claim 1, **characterised in that** adjacent to the first ends (10a) of the clamping jaws (10) is provided a compression ring (19) which is spring-loaded in the axial direction and which is provided, on its side facing towards the first ends (10a), with control surfaces (22) which cooperate with corresponding control surfaces (23) at the first ends (10a), in order to disengage the second ends (10b) of the clamping jaws, in the released position of the chuck, from the groove flank (9) of the first machine part (1).

4. Chuck according to claim 3, **characterised in that** the control surfaces are designed as oblique surfaces (22, 23) inclined to the central axis (A).

5. Chuck according to claim 3 or 4, **characterised in that** the compression ring (19) is provided, on its side facing towards the first ends (10a), with a number of radially extending projections (21) corresponding to the number of clamping jaws (10), which projections (21) each engage in mating relationship in a guide groove provided in the first ends (10a), wherein the bottom of the guide groove forms one oblique surface (23) and on each projection (21) is arranged the other oblique surface (22).

6. Chuck according to claim 3 or 4, **characterised in that** the compression ring (19) is provided, on its side facing towards the first ends (10a) of the clamping jaws (10), with a number of radial guide slots corresponding to the number of clamping jaws (10), in each of which guide slots engages a guide rib provided at each first end.

7. Chuck according to claim 3, **characterised in that** the compression ring (19) comprises, on its side facing towards the first ends (10a), along its inside diameter, a cylindrical collar (28) which projects towards the first ends (10a) and which in the released position of the chuck serves as a radial stop for the clamping jaws (10).

8. Chuck according to claim 3, **characterised in that** a counter-ring (29) is disposed between compression springs (20) which act on the compression ring (19), and the second machine part (2), one of the two rings (19, 29) is provided with a sleeve (30) surrounding the other ring (29), and on the sleeve (30) is provided a radially inwardly projecting shoulder (30a) and on the other ring (29) a radially outwardly projecting shoulder (29a), wherein the shoulders (29a, 30a) overlap radially and hold the two rings (19, 29) as well as the compression springs (20) together in an assembly unit.

9. Chuck according to claim 1 , **characterised in that** the annular groove (13) is formed directly in the second machine part (2).

10. Chuck according to claim 9 , **characterised in that** the annular groove (13) is formed directly in a machine tool spindle.

11. Chuck according to claim 1, **characterised in that** at the free end of the clamping sleeve (15) adjoining the first clamping cone (17) is provided an axial extension (24) which for release of the first machine part (1) cooperates with an ejector surface (25) provided on the latter.

12. Chuck according to claim 1, **characterised in that** at the free end of the attachment (3) of the first machine part (1) are provided several axially projecting driver pins (26) which engage in corresponding driver recesses (27) in the second machine part (2).


## Revendications

1. Dispositif de serrage destiné à serrer axialement deux organes de machine (1, 2) pouvant être détachés l'un de l'autre, et en particulier à serrer une partie d'outil dans un porte-outil, comprenant un prolongement de centrage creux (3), conique ou cylindrique, qui est prévu sur le premier organe de machine (outil) (1), une surface d'appui (6) qui entoure le prolongement et qui s'étend perpendiculairement à l'axe central (A) du dispositif de serrage, ainsi qu'une rainure annulaire (8) qui est prévue intérieurement dans le prolongement et qui comporte un flanc de rainure (9) se rétrécissant en chacune dans la direction de l'extrémité libre du prolongement, comprenant un perçage de positionnement (4) qui est prévu dans le second organe de machine (2) (porte-outil), qui est ajusté au prolongement (3) et qui est entouré par une surface frontale (7), laquelle s'étend perpendiculairement à l'axe central (A) et sur laquelle peut être serrée la surface d'appui (6), et comprenant plusieurs griffes de serrage (10) qui sont disposées dans le second organe de machine (2), pour l'essentiel parallèlement à l'axe central (A), et qui s'appuient à chaque fois par leur première extrémité (10a) sur un flanc de rainure (12) d'une rainure annulaire (13) prévue dans le second organe de machine (2), ainsi qu'un manchon de serrage (15) qui est mobile axialement dans le second organe de machine (2), qui est disposé à l'intérieur des griffes de serrage (10) dans le sens radial et qui comporte, dans la région des deuxièmes extrémités (10b) des griffes de serrage (10), un chacune de serrage (17) au moyen duquel les deuxièmes extrémités (10b) des griffes de serrage (10) peuvent être déplacées radialement vers l'extérieur et serrées contre le flanc de rainure (.9) du prolongement (3), caractérisé par le fait qu'il est prévu sur le manchon de serrage (15), dans la région des premières extrémités (10a) des griffes de serrage (10), un autre chacune de serrage (18) agissant sur ces extrémités (10a), de sorte que, lors du déplacement axial du manchon de serrage (15), les griffes de serrage (10) peuvent être déplacées radialement vers l'extérieur ou vers l'intérieur, respectivement, parallèlement à leur position de départ, que le flanc de rainure (12) ménagé dans le second organe de machine (2) est réalisé sous la forme d'une surface conique se rétrécissant dans la direction de la surface frontale, et que les griffes de serrage (10) comportent, à leurs deux extrémités (10a, 10b), des surfaces de serrage (11, 14) qui sont constituées par des portions de surfaces coniques et dont la position angulaire par rapport à l'axe central (A) correspond à la position angulaire des flancs de rainure (9, 12), de sorte qu'il existe un contact selon une surface entre les surfaces de serrage (11, 14) et les flancs de rainure (9, 12) pendant la totalité de l'opération de serrage.

2. Dispositif selon la revendication 1, **caractérisé par** le fait que chaque chacune de serrage (17, 18) comporte deux portions de surfaces coniques (17a, 17b ; 18a, 18b) qui sont inclinées sous des angles différents par rapport à l'axe central (A) et parmi lesquelles les portions de surfaces coniques (17b, 18b) qui sont à chaque fois les plus proches de la surface frontale (7) forment avec l'axe central (A) un angle (α) plus faible que les portions de surfaces coniques (17a, 18a) qui en sont à chaque fois les plus éloignées.

3. Dispositif selon la revendication 1, **caractérisé par** le fait qu'il est prévu une bague de pression (19) qui est contiguë aux premières extrémités (10a) des griffes de serrage (10), qui est chargée élastiquement dans la direction de l'axe et qui est munie, sur son côté tourné vers les premières extrémités (10a), de surfaces de commande (22) coopérant avec des surfaces de commande correspondantes (23) ménagées sur les premières extrémités (10a), afin d'amener les deuxièmes extrémités (10b) des griffes de serrage hors de prise avec le flanc de rainure (9) du premier organe de machine (1) dans l'état desserré du dispositif de serrage.

4. Dispositif selon la revendication 3, **caractérisé par** le fait que les surfaces de commande sont réalisées sous la forme de surfaces obliques (22, 23) inclinées par rapport à l'axe central (A).

5. Dispositif selon la revendication 3 ou 4, **caractérisé par** le fait que la bague de pression (19) est munie, sur son côté tourné vers les premières extrémités (10a), d'un nombre de parties en saillie (21) s'étendant radialement qui correspond au nombre des griffes de serrage (10), chacune d'elles pénétrant de manière ajustée dans une rainure de guidage prévue dans les premières extrémités (10a), cependant que le fond de la rainure de guidage constitue l'une (23) des surfaces obliques, et que l'autre surface oblique (22) est ménagée sur chaque partie en saillie (21).

6. Dispositif selon la revendication 3 ou 4, **caractérisé par** le fait que la bague de pression (19) est munie, sur son côté tourné vers les premières extrémités (10a) des griffes de serrage (10), d'un nombre de fentes de guidage radiales qui correspond au nombre des griffes de serrage (10), une nervure de guidage prévue sur chaque première extrémité pénétrant dans chacune d'elles.

7. Dispositif selon la revendication 3, **caractérisé par** le fait que la bague de pression (19) comporte, sur son côté tourné vers les premières extrémités (10a), et le long de son diamètre intérieur, un collet cylindrique (28) qui est en saillie dans la direction des premières extrémités (10a) et qui sert de butée radiale aux griffes de serrage (10) dans l'état desserré du dispositif de serrage.

8. Dispositif selon la revendication 3, **caractérisé par** le fait qu'une bague conjuguée (29) est disposée entre des ressorts de compression (20) qui agissent sur la bague de pression (19) et le second organe de machine (2), par le fait que l'une des deux bagues (19, 29) est munie d'un manchon (30) qui entoure l'autre bague (29), et par le fait qu'il est prévu, sur le manchon (30), un collet (30a) qui fait saillie vers l'intérieur dans le sens radial, et, sur l'autre bague (29), un collet (29a) qui fait saillie vers l'extérieur dans le sens radial, les collets (29a, 30a) se recouvrant dans le sens radial en maintenant ensemble les deux bagues (19, 29), ainsi que les ressorts de compression (20), pour former un ensemble de montage.

9. Dispositif selon la revendication 1, **caractérisé par** le fait que la rainure annulaire (13) est ménagée directement dans le second organe de machine (2).

10. Dispositif selon la revendication 9, **caractérisé par** le fait que la rainure annulaire (13) est ménagée directement dans une broche de machine-outil.

11. Dispositif selon la revendication 1, **caractérisé par** le fait qu'il est prévu à l'extrémité libre du manchon de serrage (15), à la suite du premier chacune de serrage (17), un prolongement axial (24) qui, pour détacher le premier organe de machine (1), coopère avec une surface d'éjection (25) prévue sur celui-ci.

12. Dispositif selon la revendication 1, **caractérisé par** le fait qu'il est prévu, à l'extrémité libre du prolongement (3) du premier organe de machine (1), plusieurs tenons d'entraînement (26) qui font saillie dans la direction axiale et qui pénètrent dans des évidements d'entraînement correspondants (27) ménagés dans le second organe de machine (2).

FIG.1

# Fig.2

# Fig.3